# EUROPÄISCHE PATENTANMELDUNG

(11) **EP 0 872 414 A2**
(43) Veröffentlichungstag der Anmeldung: **21.10.1998**
(21) Anmeldenummer: 98102158.7
(22) Anmeldetag: 07.02.1998
(51) Int. Cl.: B64C 21/06

(54) **Verfahren zur Herstellung eines Strukturbauelementes mit definierter Perforation**

(30) Priorität: 18.04.1997 DE 19716181
(71) Anmelder: Daimler-Benz Aerospace Airbus Gesellschaft mit beschränkter Haftung, 21129 Hamburg (DE)
(72) Erfinder: Lutzer, Wilhelm, Dipl.-Ing., 22589 Hamburg (DE)
(74) Vertreter: Hansmann, Dierk, Dipl.-Ing.

(57) **Zusammenfassung**

Verfahren zur Herstellung eines Strukturbauelementes mit definierter Perforation, vorzugsweise zur Verwendung als Oberflächenbauelement für eine Laminarabsaugung im Tragflügelbereich eines Flugzeuges.

Zur Herstellung eines Alternativmaterials zum lasergebohrten Titanblech sind folgende Verfahrensschritte vorgesehen:
- es wird ein CFK-Prepreg durch Verbinden von mehreren übereinander angeordneten getränkten CFK-Faserlagen hergestellt,
- jede vorgegebene n-te Faser der übereinander angeordneten CFK-Faserlagen wird in Schuß und/oder Kettrichtung aus einem als Platzhalter dienendem Material mit einer Verdampfungstemperatur, die oberhalb der Aushärtetemperatur des CFK-Prepregs liegt, hergestellt,
- das CFK-Prepreg wird in seine vorgegebene Form gebracht und bei etwa 120 °C gehärtet, und
- nach dem Härten wird das CFK-Prepreg weiter erwärmt, so daß die als Platzhalter (2) dienenden Materialien rückstandslos in die Gasphase übergehen und somit die das CFK-Prepreg durchdringenden Perforationskanäle geöffnet werden.

## Beschreibung

Die Erfindung betrifft ein Verfahren zur Herstellung eines Strukturbauelementes mit definierter Perforation, vorzugsweise zur Verwendung als Oberflächenbauelement für eine Laminarabsaugung im Tragflügelbereich eines Flugzeuges.

Aus der Aerodynamik ist es bekannt, daß eine laminare Umströmung von Trag- und Leitflächen den höchstmöglichen Auftrieb bei gleichzeitig geringstem Widerstand gegen die Anströmrichtung liefert. Häufig ist es aufgrund der gegebenen Profilform jedoch nicht möglich, für alle auftretenden Anströmbedingungen eine solche laminare Strömung zu gewährleisten. Selbst bei konstanten Anströmbedingungen kann sich die Strömung an Unstetigkeiten des Profils ablösen und turbulent werden mit der Folge verminderten Auftriebs und erhöhten Profilwiderstandes.

Wie weiterhin aus der Aerodynamik bekannt ist, kann durch kontinuierliches Absaugen der turbulenten Schicht eine weitgehende Laminarisierung der Strömung erreicht werden. Da unter Reiseflugbedingungen eine Widerstandsverminderung zugleich auch zu einer erheblichen Treibstoffersparnis und somit zu beträchtlichen wirtschaftlichen Vorteilen führt, wurde bereits versucht, durch das Anbringen von Absaugöffnungen im Tragflügel zu einer solchen Strömungslaminarisierung zu gelangen.

Aus der DE 44 36 748 C1 ist ein Verfahren zur Herstellung innerversteifter Hohlbauteile mit perforierter Wandung bekannt, die aus wenigstens zwei Deckblechen sowie zwischen diesen angeordneten Versteifungselementen bestehen. Zumindest eines der Deckbleche eines Bauteiles ist mit Perforationen versehen, wobei das Bauteil durch Innendruck- und Temperaturbeaufschlagung in eine umgebende Negativform expandiert wird. Zwischen dem perforierten Deckblech und den Versteifungselementen wird eine Dichtfolie angeordnet, die zumindest im Bereich der Perforationen in einem sich an den Umformprozeß anschließenden Arbeitsprozeß entfernt wird.

Weiterhin ist in der EP 0 532 093 B1 eine Tragfläche mit laminarer Strömungssteuerung beschrieben, wobei die Tragfläche mindestens einen ersten Bereich und einen zweiten Bereich aufweist. Der erste Bereich wird während des Fluges einem äußeren Luftdruck unterzogen, der größer ist als der äußere Luftdruck am genannten zweiten Bereich. Die Tragfläche besitzt eine eine obere und eine untere Hautoberfläche aufweisende äußere Haut mit einer Vielzahl von Perforationen. Mit der unteren Hautoberfläche ist ein Ansaugsystem verbunden, welches Luft durch die Perforationen in einer Richtung von der oberen Oberfläche zur unteren Oberfläche hindurchsaugt. Bei der Herstellung dieser vorbekannten Tragfläche ist vorgesehen, daß das Perforieren der äußeren Haut unter Benutzung eines Laserstrahles erfolgt.

Zur Absaugung der Grenzschicht mit dem Ziel der Verbesserung der Laminarisierung werden heute lasergebohrte Titanbleche verwendet. Diese Bleche sind außerordentlich teuer und nach dem Bohren sehr rißempfindlich. Die Gefahr der Rißbildung - und damit der Verlust eines Bleches - ist sehr groß, da die Bleche nur im ebenen Zustand gebohrt werden können und somit in einem späteren Arbeitsvorgang verformt werden müssen.

Der Erfindung liegt die Aufgabe zugrunde, ein technisch unaufwendiges und preiswertes Verfahren zu schaffen, durch welches ein Alternativmaterial zum lasergebohrten Titanblech hergestellt wird.

Die Aufgabe wird erfindungsgemäß durch folgende Verfahrensschritte gelöst:
- es wird ein CFK-Prepreg durch Verweben von mehreren übereinander angeordneten getränkten CFK-Faserlagen hergestellt,
- jede vorgegebene n-te Faser der übereinander angeordneten CFK-Faserlagen wird in Schuß- und/oder Kettrichtung aus einem als Platzhalter dienendem Material mit einer Verdampfungstemperatur, die über der Aushärtetemperatur des CFK-prepregs liegt, hergestellt,
- das CFK-Prepreg wird in seine vorgegebene Form gebracht und bei etwa 120 °C gehärtet, und
- nach dem Härten wird das CFK-Prepreg weiter erwärmt, so daß die als Platzhalter dienenden Materialien rückstandslos in die Gasphase übergehen und somit die das CFK-Prepreg durchdringenden Perforationskanäle geöffnet werden.

Durch das erfindungsgemäße Verfahren ist vorteilhafterweise die Herstellung eines Strukturbauelementes mit definierter Perforation möglich, ohne daß die Gefahr einer Rißbildung innerhalb des Bauelementes und damit sein Verlust besteht.

Ausgestaltungen des erfindungsgemäßen Verfahrens sind in den Unteransprüchen 2 bis 8 beschrieben, insbesondere kann das Strukturbauelement nach dem Härten auf etwa 1400 °C pyrolisiert werden.

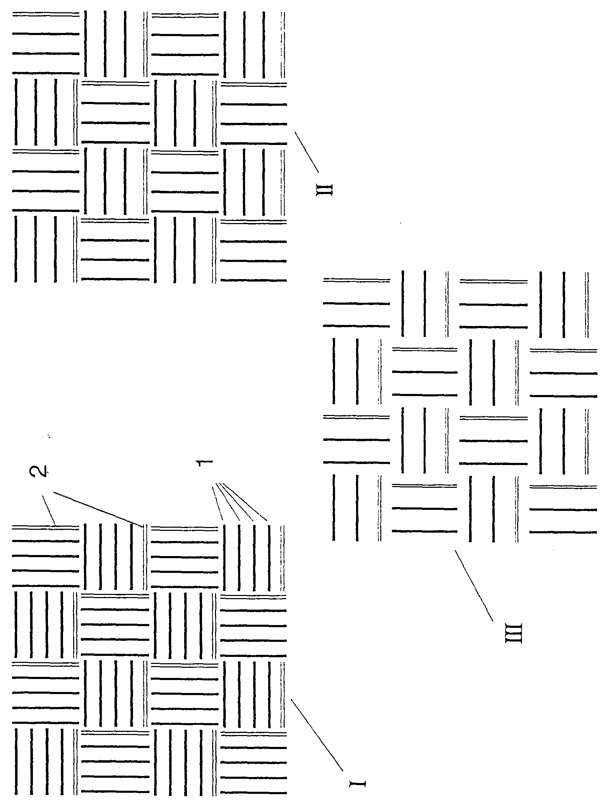

In der Zeichnung sind drei Beispiele I, II und III von verschiedenen Lagen aus Kohlefaser-verstärktem-Kunststoff dargestellt, deren (verbleibende) Fasern mit 1 bezeichnet sind. Die drei dargestellten Lagen unterscheiden sich voneinander durch ihre Anzahl von Fasern pro Faserplatz und - infolge der gleichgroßen Faserplätze - auch durch ihre Abstände zueinander. Zwischen den Fasern 1 eines Faserplatzes weist jede CFK-Faserlage in Schuß- oder in Kettrichtung angeordnete Platzhalter-Faserelemente 2 auf, deren Verdampfungstemperatur über der Aushärtetemperatur des Harzes liegt. Als Materialien für die Platzhalter 2 können Faserelemente aus POM (Polyoxymethylen, Polyformaldehyd oder Polyacetalharz), PMMA (Polymethylmethacrylat) oder PET (Polyäthylenterephthalat) verwendet werden.

Zur Herstellung eines Strukturbauelementes werden z. B. die aus der Zeichnung ersichtlichen CFK-Lagen I in Kunstharz getränkt und zu einem CFK-Prepreg aufeinander gelegt, wobei die Platzhalterfasern 2 nach Möglichkeit übereinander angeordnet werden. Anschließend wird das CFK-Prepreg in seine vorgegebene Form gebracht und bei etwa 120 °C gehärtet. Nach dem Härten wird das CFK-Prepreg weiter erhitzt, z. B. auf eine Anfangstemperatur von 200 bis 300 °C, so daß die als Platzhalter 2 dienenden Materialien rückstandslos in die Gasphase übergehen. Somit werden die das CFK-Prepreg durchdringenden Perforationskanäle geöffnet. Das Strukturbauelement kann durch Erhitzen auf etwa 1400 °C pyrolisiert werden.

Es ist auch möglich, als tieferliegende Faserschichten sich von den oberen feinen Faserschichten I in ihrer Struktur unterscheidende grobe CFK-Faserlagen II oder III mit einem derart ausgewählten Faser- bzw. Lochabstand übereinander anzuordnen, daß nach dem Verdampfen der in den einzelnen CFK-Faserlagen I, II und III angeordneten Platzhaltermaterialien 2 eine im statistischen Mittel ausreichende Anzahl von Perforationskanälen hergestellt wird. Weiterhin können durch die Verwendung von CFK-Faserlagen I, II oder III mit einer in einer Richtung der Prepregdicke ab- bzw. zunehmender Strukturfeinheit konische Perforationskanäle hergestellt werden.

Auch ist es möglich, vor dem Härten des CFK-Prepregs unterhalb seiner Deckschicht beheizbare Metallfasern einzuweben, mit deren Hilfe eine Enteisung des hergestellten Strukturbauelementes durchgeführt werden kann.

## Patentansprüche

1. Verfahren zur Herstellung eines Strukturbauelementes mit definierter Perforation, vorzugsweise zur Verwendung als Oberflächenbauelement für eine Laminarabsaugung im Tragflügelbereich eines Flugzeuges, gekennzeichnet durch folgende Verfahrensschritte:
- es wird ein CFK-Prepreg durch Verbinden von mehreren übereinander angeordneten getränkten CFK-Faserlagen (I, II, III) hergestellt,
- jede vorgegebene n-te Faser (1) der übereinander angeordneten CFK-Faserlagen (I, II, III) wird in Schuß- und/oder Kettrichtung aus einem als Platzhalter (2) dienendem Material mit einer Verdampfungstemperatur, die oberhalb der Aushärtetemperatur des CFK-Prepregs liegt, hergestellt,
- das CFK-Prepreg wird in seine vorgegebene Form gebracht und bei etwa 120 °C gehärtet, und
- nach dem Härten wird das CFK-Prepreg weiter erwärmt, so daß die als Platzhalter (2) dienenden Materialien rückstandslos in die Gasphase übergehen und somit die das CFK-Prepreg durchdringenden Perforationskanäle geöffnet werden.

2. Verfahren nach Anspruch 1, dadurch gekennzeichnet, daß als Material für die Platzhalter (2) POM verwendet wird.

3. Verfahren nach Anspruch 1, dadurch gekennzeichnet, daß PMMA als Material für die Platzhalter (2) verwendet wird.

4. Verfahren nach Anspruch 1, dadurch gekennzeichnet, daß als Material für die Platzhalter (2) PET verwendet wird.

5. Verfahren nach Anspruch 1, dadurch gekennzeichnet, daß das Strukturbauelement nach dem Härten auf etwa 1400 °C pyrolisiert wird.

6. Verfahren nach Anspruch 1, 2, 3, 4 oder 5, dadurch gekennzeichnet, daß als tieferliegende Faserschichten sich von den oberen feinen Faserschichten (I) in ihrer Struktur unterscheidende grobe CFK-Faserlagen (II oder III) mit einem derart ausgewählten Faser- bzw. Lochabstand verwendet werden, daß nach dem Verdampfen der in den einzelnen CFK-Faserlagen (I, II, III) angeordneten Platzhalter materialien (2) eine im statistischen Mittel ausreichende Anzahl von Perforationskanälen hergestellt wird.

7. Verfahren nach Anspruch 1, 2, 3, 4, 5 oder 6, dadurch gekennzeichnet, daß durch die Verwendung von CFK-Faserlagen (I, II, III) mit in einer Richtung der Prepregdicke ab- bzw. zunehmender Strukturfeinheit konische Perforationskanäle hergestellt werden.

8. Verfahren nach einem der Ansprüche 1 bis 7, dadurch gekennzeichnet, daß vor dem Härten des CFK-Prepregs unterhalb seiner Deckschicht beheizbare und damit einer Enteisung des Strukturbauelementes dienende Metallfasern eingewebt werden.
